# EUROPÄISCHE PATENTSCHRIFT

(11) **EP 1 428 361 B1**
(45) Veröffentlichungstag und Bekanntmachung des Hinweises auf die Patenterteilung: **01.09.2010**
(21) Anmeldenummer: 02776691.4
(22) Anmeldetag: 20.09.2002
(51) Int. Cl.: H04L 12/56, H04Q 11/04

(54) **VERKEHRSBEGRENZUNG MITTELS ZULÄSSIGKEITSPRÜFUNG FÜR EIN PAKETORIENTIERTES VERBINDUNGSLOSES NETZ MIT QOS NIVEAU ÜBERTRAGUNG**
TRAFFIC RESTRICTION FOR A NETWORK WITH QOS TRANSMISSION
LIMITATION DE TRAFIC POUR RESEAU AVEC TRANSMISSION A BON NIVEAU DE QUALITE DE SERVICE

(30) Priorität: 20.09.2001 DE 10146349; 14.12.2001 DE 10161546
(43) Veröffentlichungstag der Anmeldung: 16.06.2004
(73) Patentinhaber: Nokia Siemens Networks GmbH & Co. KG, 81541 München (DE)
(72) Erfinder: SCHRODI, Karl, 82538 Geretsried (DE)
(86) Internationale Anmeldenummer: PCT/DE2002/003538
(87) Internationale Veröffentlichungsnummer: WO 2003/026229

(56) Entgegenhaltungen:
- EP-A- 1 133 112
- WO-A-01/54448
- WO-A-93/11622
- H.HUSSMANN ET AL: "An edge device for supporting internet integrated services over switched ATM networks" September 1998 (1998-09) , INTERWORKING CONFERENCE , TORONTO XP002230478 Seite 6, Spalte 1, Zeile 22 -Seite 7, Spalte 2, Zeile 32

## Beschreibung

Die Erfindung betrifft ein Verfahren, ein Netz, einen Randknoten und einen Server zur Verkehrsbegrenzung in einem paketorientierten, verbindungslosen Netz für eine effiziente Übertragung mit QoS Niveau von Datenpaketen zumindest einer Prioritätsklasse.

Die Integration von Telekommunikations- und Datendiensten führt zu einer Reihe von Anforderungen an Vermittlungstechnik und Netze. Um für Infotainment und Geschäftsverkehr gleichermaßen geeignet zu sein, sollten die benutzten Netze eine hohe Kapazität besitzen, Übertragung in Echtzeit zulassen, zuverlässig sein und ein hohes Maß an Sicherheit garantieren. Daneben steht als weitere Bedingung möglichst geringe Kosten.

Datendienste werden derzeit in großem Umfang über IP-Netze (auf dem Internet Protocol basierende Netze) abgewickelt, die paketorientiert und - auf der IP-Ebene - verbindungslos arbeiten. Fortschritte in der Router-Technologie haben zur Entwicklung von IP-Routern geführt, die hinsichtlich Kapazität des vermittelten Datenverkehrs und Verzögerungszeiten durch Warteschlangen prinzipiell Telekommunikationsdienste und bandbreitenintensive Dienste wie Video-on-Demand oder Videokonferenzen in Echtzeit ermöglichen.

Schwierigkeiten entstehen bei einem hohen Ausnutzungsgrad des IP-Netzes, bei dem die Verzögerungszeiten exponentiell anwachsen oder bei der übermäßigen Aggregierung von Datenverkehr auf einzelnen Strecken, die dann als Flaschenhals wirken und die Übertragungsrate beschränken.

Ob dieser Schwierigkeiten ist es bei herkömmlichen IP-Netzen nicht in gewünschtem Umfang möglich, eine hohe Dienstqualität - in der Literatur meist mit Quality of Service (QoS) bezeichnet - zu garantieren.

Weiterentwicklungen zielen darauf ab, bessere Zusagen hinsichtlich der Dienstqualität machen zu können, ohne die Vorteile der geringen Komplexität und Flexibilität des IP-Netzes einzubüßen.

Das Differentiated Services (Diff-Serv) Modell basiert auf der Beobachtung, dass die best-effort Behandlung von Datenpaketen im IP-Netz zu den oben genannten Schwierigkeiten bei der Garantie von Dienstqualität führt. Herkömmlich werden Datenpakete nach Möglichkeit schnell und vollständig übertragen, ohne dass Garantien hinsichtlich der Zuverlässigkeit und Sicherheit der Übertragung gegeben werden. Bei hoher Auslastung oder Überlastung des Netzes kommt es zur Beeinträchtigung der Dienstqualität durch Verzögerungen oder Verwurf von Datenpaketen.

Das Diff-Serv Konzept zielt auf eine bessere Dienstqualität für Dienste mit hohen Qualitätsanforderungen durch Einführung von Dienstklassen. Man spricht in diesem Zusammenhang auch häufig von einem CoS (class of service) Modell. Das Diff-Serv Konzept ist in den von der IETF veröffentlichten RFCs mit den Nummern 2474 und 2475 beschrieben. Die RFCs 2638 und 2998 behandeln weitere Aspekte des Konzepts. Im Rahmen des Diff-Serv Konzepts wird mit Hilfe eines DS (Differentiated Services) Feldes im IP Header der Datenpakete durch Setzen des DSCP (DS codepoint) Parameters eine Priorisierung des Paketverkehrs vorgenommen. Diese Priorisierung erfolgt mit Hilfe einer "per hop" Ressourcenallokation, d.h. die Pakete erfahren bei den Knoten je nach der im DS Feld durch den DSCP Parameter festgelegten Dienstklasse (class of service) eine unterschiedliche Behandlung. Man verwendet in diesem Zusammenhang den Ausdruck per-hop behavior (PBH). Zum Beispiel werden im Zuge eines PBH höhere Dienstklassen hinsichtlich der Einreihung und Abarbeitung von Warteschlangen bei den Knoten bevorzugt behandelt.

Die zentralen Elemente eines auf dem Diff-Serv Konzept beruhenden Netzes sind die DS Subnetze - in der englischsprachigen Literatur häufig als DS domain oder single routing domain bezeichnet - und die DS Randknoten. In vielen Fällen wird ein Subnetz dem Netz eines Dienstanbieters (service provider domain) entsprechen. Bei den DS Randknoten unterscheidet man zwischen DS Zugangsknoten (ingress nodes) und DS Ausgangsknoten (egress nodes). Datenpakete gelangen über einen DS Zugangsknoten in ein DS Subnetz und verlassen das Subnetz über einen DS Ausgangsknoten. Ein DS Randknoten kann dabei die Funktionalität eines DS Zugangsknoten für eingehenden Verkehr und eines DS Ausgangsknoten für ausgehenden Verkehr vereinen. Die Funktionalität der DS Randknoten umfasst die Auswahl von Datenpaketen entsprechend DSCP Parameter und das Markieren von Datenpaketen mit Hilfe von DSCP Parametern. Zudem besteht im DS Subnetz die Möglichkeit, mit Hilfe von Vorrichtungen zur Verwaltung und Kontrolle des Datenverkehrs (traffic conditioning) Steuermaßnahmen wie das Messen von Datenflüssen, die Verteilung von Datenpaketen auf Warteschlangen oder das Verwerfen von Datenpaketen vorzunehmen. Diese Steuermaßnahmen werden häufig in DS Zugangsknoten oder DS Ausgangsknoten vorgenommen. Im Rahmen von traffic conditioning können Datenpakete klassifiziert und mit einem für die entsprechende Dienstklasse vorgesehenes Verkehrsprofil (z.B. Bandbreite, Ressourcen) verglichen werden. Bei Abweichungen von dem Verkehrsprofil können Maßnahmen, wie das Einreihen in eine Warteschlange oder das Verwerfen von Datenpaketen, vorgenommen werden.

Typischerweise werden in einem DS Subnetz Flows oder Verbindungen priorisiert. Die Priorisierung erfolgt im DS Zugangsknoten für das entsprechende DS Subnetz gegebenenfalls durch Setzen bzw. Ändern des DSCP Parameters. Bei den Knoten innerhalb des Netzes (core nodes) wird der DSCP Parameter gelesen und entsprechend der Priorisierung Ressourcen zugewiesen. Die Interpretation des DSCP Parameters und Ressourcenzuweisung der einzelnen inneren Knoten erfolgt unabhängig voneinander (per-hop behaviour). Bei dem Ausgangsknoten wird evtl. eine Änderung des DSCP Parameters beim Zugangsknoten rückgängig gemacht, d.h. der DSCP auf den ursprünglichen Wert zurückgesetzt. Auf diese Weise lässt sich der DSCP lokal, d.h. je nach Subnetz und dessen Eigenschaften, anpassen.

Das Diff-Serv Konzept vermeidet komplexe Reservierungsprozeduren von Pfaden oder Bandbreite und erlaubt Priorisierung von Datenverkehr. Bei einer Übertragung über mehrere Subnetze hinweg werden Dienstklassen mit Hilfe sogenannter Service Level Agreements (SLA) für die gesamte Übertragung festgelegt und von den einzelnen Subnetzen wie oben beschrieben im Rahmen des traffic conditionings umgesetzt. In der Praxis kommen aber temporäre und/oder lokale Engpässe beispielsweise durch Aggregierung von Datenverkehr auf einzelnen Strecken vor. Im Regelfall folgen Datenpakete mit dem gleichen Ziel von dem Moment an, in dem sie in einem Knoten zusammentreffen, derselben eingestellten Route. Bei Engpässen sorgt das Diff-Serv Konzept dafür, dass Datenpakete mit niedriger Priorität zuerst Verzögerungen oder Verwurf erfahren. Die Übertragungsqualität für die hoch priorisierten Datenpakete wird dadurch verbessert, aber Qualitätsstandards z.B. für Echtzeitübertragung können nicht garantiert werden. Im Rahmen des Diff-Serv Konzeptes gäbe es nur die Möglichkeit Übertragung mit QoS Niveau, d.h. eine Übertragung, bei der bestimmte Qualitätszusagen gegeben und eingehalten werden können, zu gewährleisten, wenn Verkehrsprofile mit einer so geringen Auslastung des Subnetzes eingestellt werden, dass Belastungsspitzen durch Reserve-Bandbreite abgefangen würde. Das wird aus wirtschaftlichen Gründen, d.h. wegen der daraus resultierenden geringen Netzauslastung, in der Regel nicht gemacht. Aus diesem Grunde spricht man im Zusammenhang mit dem Diff-Serv Konzept von einem CoS (class of service) Ansatz und nicht von einem QoS (quality of service) Ansatz.

In verbindungsorientierten, paketbasierten Netzen, bekannt vor allem durch die Technik des Asynchronen Transfer Mode (ATM), wird die Einhaltung von QoS Niveaus in der Regel durch eine Begrenzung der Verkehrsmenge mittels Zugangskontrollen bewirkt.

H. Hussmann et al. beschreiben in "An edge device for supporting internet integrated services over switched ATM Networks", September 1998 (1998-09), Interworking Conference, Toronto XP002230478, zwei Szenarien, bei denen eine Zulässigkeitsprüfung, die sich auf eine Ressourcenreservierung entlang eines Pfades in einem verbindungsorientierten (ATM-)Netz bezieht, entweder beim Netzäusgang (1. Szenario) oder beim Netzeingang (2. Szenario) erfolgt. Die Zugangskontrolle orientiert sich aber, unabhängig vom Ort, an dem sie durchgeführt wird, an der Übermittlungskapazität des zuvor bestimmten zu nutzenden Pfades.

WO 01/54448 A offenbart ein Verfahren zur Steuerung des Zugangs zu einem Kommunikationsnetz, bei dem eine Zugangsfunktion einem Zugangsknoten eine verfügbare Kapazität zuordnet, die dem Zugangs knoten zur Übermittlung von Verkehrsströmen an das Kommunikationsnetz zur Verfügung steht. Diese verfügbare Kapazität kann bei einer Änderung der Gesamtübermittlungskapazität des Netzes adaptiv verändert werden. Mit diesem Verfahren kann die Gesamtmenge des Verkehrs, der in ein Netz hineingelassen wird, unabhängig von dessen Ziel angepasst und so begrenzt werden. Damit soll eine gewünschte Dienstgüte erreicht bzw. der Verwurf oder Verlust von Datenpaketen vermieden werden. Die Behandlung möglicher Engpässe im Ausgangsbereich eines verbindungslos arbeitenden Netzes durch die bereits beschriebene Aggregierung von Verkehrsströmen auf derselben Route bzw. zum selben Ziel hin wird jedoch nicht betrachtet. Die zulässige Gesamtübermittlungskapazität in einem verbindungslosen Netz müsste deshalb entsprechend niedrig und ineffizient eingestellt werden.

Die Erfindung hat zur Aufgabe, eine effiziente Übertragung von Datenpaketen mit QoS Niveau für paketvermittelte, verbindungslos arbeitende Netze zu ermöglichen.

Die Aufgabe wird durch die Gegenstände der Ansprüche 1, 13, 18 und 20 gelöst.

Die Erfindung zielt auf ein effizientes QoS-fähiges Netz ab, das paketvermittelt und verbindungslos arbeitet. Das Konzept für das Netz beinhaltet folgende drei Überlegungen:
- Eine hohe Effizienz erfordert Flexibilität bei der Wahl der Wege von Datenpaketen bzw. bei deren Verteilung. Mit einer dynamischen Änderung bzw. Anpassung von Wegen kann z.B. der Entstehung von Ressourcenengpässen entgegengewirkt werden.
- Eine hohe Komplexität lässt sich verhindern, indem lokal, • z.B. jeweils vom betroffenen Router, Entscheidungen (z.B. über Wege, Warteschlangen, Verwurf von Datenpaketen etc.) getroffen werden. Nicht-lokale Zustände bzw. Reservierung von Wegen wird vermieden. Entscheidungen über Wege können je nach Datenpaket oder je nach Verbindung bzw. Flow getroffen werden. Dabei ist die Verteilung einzelner Datenpakete am flexibelsten.
- Um QoS zu garantieren, bedarf es strikter Grenzen und einer Überwachung hinsichtlich der Auslastung des Netzes.

Die vorliegende Patentanmeldung behandelt den dritten Aspekt.

Durch die erfindungsgemäßen Zulässigkeitsüberprüfungen soll überprüft werden, ob den Anforderungen bei der Übertragung einer Gruppe von Datenpaketen einer Prioritätsklasse korrespondierende Ressourcen im Netz zur Verfügung stehen. Erfindungsgemäß werden für durch das Netz zu leitende Gruppen von Datenpaketen zumindest einer Prioritätsklasse Zulässigkeitsprüfungen durchgeführt. Diese Zulässigkeitsprüfungen umfassen auf den Netzeingang und am Netzausgang bezogene Zulässigkeitsprüfungen, die auch am Netzeingang und am Netzausgang durchgeführt werden können. Nur bei Gruppen von Datenpaketen, für die alle Zulässigkeitsprüfungen positiv ausfallen, wird die Übertragung mit der Prioritätsklasse der Datenpakete zugelassen. Dagegen wird mit Gruppen von Datenpaketen, bei denen eine der Zulässigkeitsprüfungen negativ ausfällt, anders verfahren (Anspruch 1).

Eine Gruppe von Datenpaketen kann dabei durch die Datenpakete eines Verkehrsstroms oder durch die an einem physikalischen Port, z.B. bei einem Netzzugang, aggregierten Datenpakete gegeben sein (Anspruch 2). Ein Verkehrsstrom entspricht beispielsweise einem Flow, umfasst die Datenpakete einer Verbindung oder umfasst Datenpakete mit einer identischen Adressinformation, wie z.B. alle Datenpakete mit derselben Quelle oder demselben Ziel (Anspruch 3).

Um eine Übertragung mit QoS Niveau zu gewährleisten, muss eine Überlastung der Gesamtkapazität des Netzes und das Auftreten von Ressourcenengpässen verhindert werden. In diesem Sinne können bei den Zulässigkeitsprüfung der zu übertragenden Gruppen von Datenpaketen nach Parametern wie z.B. mittlere Daten- und/oder Paketrate, Spitzenrate, etc. bewertet werden, und es kann überprüft werden, ob für die Übertragung der Verkehrsströme mit der angeforderten Dienstqualität ausreichend Übertragungskapazität zur Verfügung steht. Zudem wird durch die Zulässigkeitsprüfungen sichergestellt, dass eingangs- sowie ausgangsseitig genug Ressourcen (z.B. Bandbreite, Warteschlangenkapazität, ..) zur Verfügung stehen (Anspruch 4). Die Überprüfung kann abhängig von der Prioritätsklasse der Datenpakete oder abhängig von dem Verkehr mit gleicher oder höherer Priorität erfolgen (Anspruch 5). Beispielsweise könnte ohne Zulässigkeitsprüfung der ausgangsseitigen Ressourcen von mehreren Eingängen des Netzes zum selben Ausgang übertragen werden und so bei dem Ausgang ein Engpass entstehen. Qualitätsgarantien könnten dann nicht eingehalten werden, sondern bestenfalls nur - wie bei dem Diff-Serv Konzept - Zusagen hinsichtlich der priorisierten Behandlung von Verkehrsströmen.

Als Kriterium für ein positives Ergebnis der Zulässigkeitsprüfungen kann z.B. ein Schwellenwert dienen, der abhängig von der Kapazität von dem jeweils benutzten Netzeingang und - ausgang, der Gesamtkapazität des Netzes, der gewünschten Qualität bzw. Prioritätsklasse etc. bestimmt wird. Beispielsweise werden für eine mit einer Priorität zu übertragende Gruppe von Datenpaketen Verkehrsparameter wie die mittlere Daten- und/oder Paketrate und die Spitzenrate angemeldet (Anspruch 7). Zudem kann die gewünschte Prioritätsklasse angemeldet werden. Alternativ wird die Prioritätsklasse auf Grund von Parametern bzw. Anforderungen wie maximale Verlustrate und Echtzeitübertragung bestimmt.

Denkbar ist auch, dass es für jede Prioritätsklasse mehrere Schwellenwerte auf Basis unterschiedlicher Bewertungsparameter gibt, die alle separat oder in entsprechenden Abhängigkeiten voneinander einzuhalten sind. Bei einem negativen Ergebnis der Zulässigkeitsprüfungen kann die Übertragung der Gruppe von Datenpaketen abgewiesen werden (Anspruch 6) oder die Übertragung mit einer niedrigeren Priorität oder nicht priorisiert erfolgen.

Auf Grund der Zulässigkeitsprüfungen kann nach Maßgabe der angeforderten Qualitätsmerkmale eine Reservierung von Ressourcen (z.B. Bandbreite, Warteschlangen) vorgenommen werden (Anspruch 8). Diese Reservierung wird im Regelfall den betroffenen Netzzugang und -ausgang sowie die Gesamtnetzbelastung (z.B. Kapazität, Behandlung bei Warteschlangen entsprechend Priorisierung) betreffen.

Die Einhaltung der zentralen, für die jeweiligen Verkehrsströme angemeldete Verkehrsparameter wie z.B. der Übertragungsrate sollte nach Möglichkeit überwacht werden, um die Einhaltung der Grenzwerte bzw. Schwellenwerte für die Auslastung des Netzes zu garantieren (Anspruch 9). Die Überwachungsfunktion - die englischen Begriffe traffic enforcement und policing finden sich häufig in der Literatur dafür - wird sinnvollerweise die bei der Anforderung der Qualitätsmerkmale angegebenen Verkehrsparameter mit den tatsächlichen Verkehrsparameter des entsprechenden Verkehrsstroms vergleichen. Nicht angemeldete Datenpakete können ausgeblockt werden (Anspruch 10). Am Netzeingang können zudem bekannte traffic shaping Mechanismen wie leaky bucket oder token bucket zum Einsatz kommen. Mögliche Überlastabwehrmaßnahmen sind z.B.
- Der Verwurf von Datenpaketen
- Das Markieren von Datenpaketen
- Das Puffern von Datenpaketen
- Das Umschalten oder Blockieren des Verkehrsstroms
- Das Umsetzen der die Vereinbarung verletzenden Datenpakete oder des gesamten zugehörigen Datenstroms auf eine niedrigere Prioritätsklasse oder Behandlung entsprechend des best effort Ansatzes

Eine Übertragung mit QoS Niveau von Verkehrsströmen mit entsprechender Prioritätsklasse bzw. Verkehrsklasse setzt eine entsprechende Behandlung der Prioritätsklasse voraus. Es ist sinnvoll, nur einen Teil der Gesamtkapazität mit priorisiertem Verkehr auszulasten. Der andere Teil der Kapazität des Netzes wird dann mit nicht-priorisiertem Verkehr ausgelastet. Diese nicht-priorisierte Verkehr kann dann entsprechend dem best-effort Prizip behandelt werden (Anspruch 12). Die Zulässigkeitsüberprüfungen können dann auf den priorisierten Verkehr beschränkt werden (Anspruch 11). Durch diese Beschränkung des priorisierten Verkehrs wird sichergestellt, dass die Kapazität des Netzes voll ausgelastet werden kann, ohne dass sich Belastungsspitzen negativ auf den priorisierten Verkehr auswirken. Das Qualitätsniveau, mit der nicht-priorisierter Verkehr übertragen wird, wirkt dann quasi als Puffer für den priorisierten Verkehr. Eine mögliche Vorgehensweise, Grenzen für die Auslastung mit priorisiertem Verkehr zu setzen, ist, für jede Prioritätsklasse eine feste maximale prozentuale Auslastung für den Verkehr mit gleicher oder höherer Prioritätsklasse anzugeben. Beispielsweise könnte man in einem Netz mit zwei Prioritätsklassen für Verkehr mit der höheren Verkehrsklasse die Grenze auf eine Auslastung mit 30% setzen und die Grenze für Verkehr mit der höheren oder niedrigeren Prioritätsklasse auf 60% festlegen. Für nicht-priorisierten Verkehr bliebe dann eine minimale Kapazität von 40%.

Bei der Übertragung von Datenpaketen können so prioritätsklassenspezifisch Qualitätsmerkmale garantiert werden, die eine Übertragung mit QoS Niveau ermöglichen. Das erfindungsgemäße Konzept geht dabei von der Beobachtung aus, dass sich eine geeignete Dienstqualität (QoS) am jeweiligen Dienst zu orientieren hat. Z.B. können menschliche Sinnesorgane in einem gewissen Rahmen unvollständige Information verarbeiten, ohne dass es zu einem subjektiven Qualitätsverlust kommt. Für die interaktive Steuerung von Maschinen (z.B. Fernsteuerung von Robotern) sind die Anforderungen unter Umständen deutlich höher. Entsprechend strengere Kriterien sollten dann angewandt werden. Dienstabhängig können deshalb Kriterien bzw. Grenzen definiert werden, die eine QoS Niveau Übertragung gewährleisten. Bei paketorientierter Übermittlung betreffen diese Kriterien u.a.
- Art und Umfang möglicher Informationsverluste
- Feste und/oder variable Verzögerungen
- Die zeitliche Konsistenz (Reihenfolge) der Informationen.

Erfindungsgemäß ist das Netz mit Mitteln zur Durchführung einer Zulässigkeitsprüfung am Netzeingang und am Netzausgang für die Übertragung einer durch das Netz zu leitenden Gruppe von Datenpaketen einer Prioritätsklasse ausgestattet (Anspruch 13). Es kann im Sinne einer Übertragung von priorisierten Datenpaketen mit QoS Niveau dimensioniert werden. Die Dimensionierung kann dabei nach Maßgabe von Grenzwerten für QoS bestimmende Kriterien bzw. Faktoren erfolgen (Anspruch 14). Je nach Dienst können maximale Werte für die statistische Wahrscheinlichkeit angegeben werden, mit der die Grenzwerte für die QoS bestimmenden Faktoren überschritten werden können, ohne dass es zu einer signifikanten Qualitätseinbuße kommt. Diese maximalen Werte für die statistische Wahrscheinlichkeit können in die Dimensionierung des Netzes einfließen (Anspruch 15).

Durch das Einhalten von Auslastungsgrenzen für das Netz - möglicherweise im Rahmen einer dienstspezifisch vorgegebenen statistischer Wahrscheinlichkeit - und der Beschränkung des priorisierten Verkehrs sowie durch eine gute Verteilung des Verkehrs und der Limitierung des Verkehrs an den Zugängen und Ausgängen des Netzes bzw. den physikalischen Ports können statistische Werte für die Qualitätsverlustfaktoren angegeben werden. Mit Hilfe dieser statistischen Werte und ihrer Varianz lassen sich QoS Dienste garantieren.

In vielen Fällen ist es sinnvoll, wenn das Netz einer single routing domain oder dem Netz eines Diensteanbieters (service provider domain) entspricht (Anspruch 16). Auf diese Weise können die Funktionen der Zulässigkeitsprüfungen und der Überwachung einfacher in das Netz integriert werden. Vertrauliche Leistungsdaten des Netzes brauchen nicht nach außen gegeben werden. Bei der Übertragung über mehrere single routing domains oder Dienstanbieternetze ist durch die Garantie durch die Netzverwaltung in den jeweiligen Netz und Überprüfung der Netzzu- und -abgänge sichergestellt, dass QoS Niveau Übertragung über mehrere, miteinander verbundene erfindungsgemäße Netze und gegebenenfalls an einen an ein erfindungsgemäßes Netz angeschlossenen Host möglich ist. Ein Internet mit QoS Niveau Übertragung kann so aus erfindungsgemäß funktionierenden Netzen, die z.B. jeweils eine single routing domain umfassen, aufgebaut werden. Dabei können wie im Rahmen des herkömmlichen Internets IP basierte Netze verwendet werden (Anspruch 17), die z.B. nicht priorisierten Verkehr entsprechend dem best-effort Prizip übertragen.

Eine wichtige Rolle kommt dabei den Randknoten der Netze zu, über die der Datenverkehr in das jeweilige Netz gelangt bzw. dieses wieder verlässt. Durch die Zulässigkeitsprüfungen für priorisierten Verkehr hinsichtlich der Ressourcen am Netzeingang und am Netzausgang kann sichergestellt werden, dass bei dem Übergang von Netzen die quality of service erhalten bleibt. Für die Zulässigkeitsprüfung können Randknoten mit Mitteln zur Durchführung der Zulässigkeitsprüfungen am Netzeingang oder am Netzausgang ausgestattet sein (Anspruch 18). Die Randnoten können zudem Mittel für die Überwachungsfunktionen aufweisen (Anspruch 19). Es kann auch alternativ oder komplementär zu der Bereitstellung der Funktionen in Randknoten ein Server mit Mittel für die Zulässigkeitsprüfungen (Anspruch 20) und evtl. für die Überwachung (Anspruch 21) im Netz platziert werden.

Im folgenden werden zwei Varianten des Erfindungsgegenstands im Rahmen als Ausführungsbeispiels dargestellt. Es zeigen
Fig. 1: System mit Datenübertragung über ein erfindungsgemäßes Netz
Fig. 2: Erfindungsgemäßes Netz
Fig. 3: Schematische Darstellung verschiedener Wege für das Routing zweier Flows in einem erfindungsgemäßem Netz
Fig. 4: Schematische Darstellung verschiedener Wege für das Routing zweier Flows mit gleichen Ziel in einem erfindungsgemäßem Netz

Der Anschaulichkeit wegen sei angenommen, dass die Erfindung im Rahmen eines Telefonats über ein IP Netz IPN - man spricht hier von Voice over IP (VoIP) zur Anwendung komme. Bei diesem IP Netz IPN kann es sich z.B. um eine Single Routing Domain des Internets handeln. Telefonate unterliegen Echtzeitanforderungen. Der zugehörige Datenverkehr wird deshalb priorisiert. Sinngemäß ist der Erfindungsgegenstand analog für alle anderen Dienste, bei denen eine Priorisierung des Datenverkehrs notwendig ist, anwendbar. Beispiele für solche Dienste sind Video-on demand, Web-Konferenzen, Multimediaanwendungen etc.

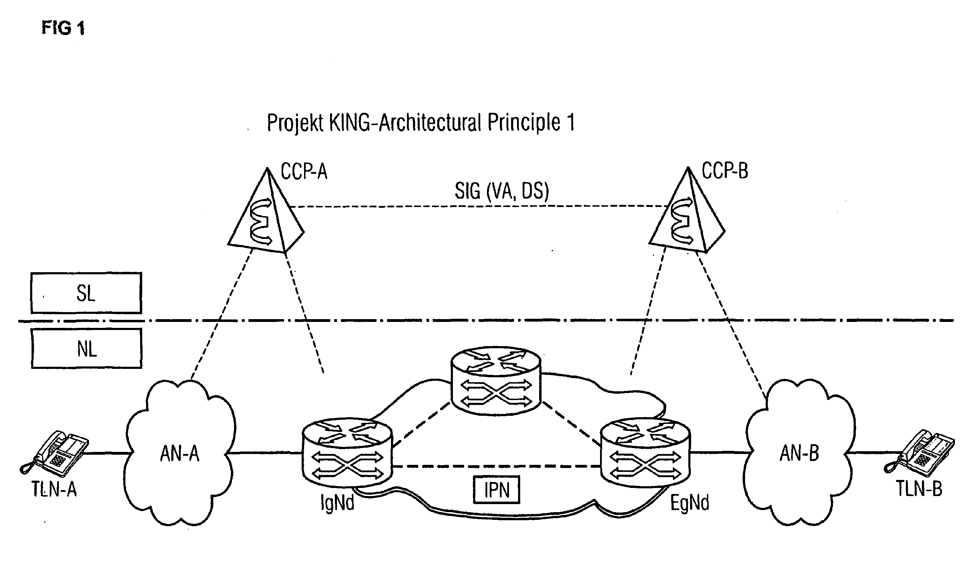

In Figur 1 ist schematisch ein System mit VoIP Übertragung dargestellt. Über Zugangsnetze AN-A und AN-B (AN: für Access Network) sind die Telekommunikations-Endgeräte TLN-A und TLN-B an ein öffentliches Netz angeschlossen, das das IP Netz IPN umfasst. Im Rahmen der zwei Varianten des Ausführungsbeispiels wird angenommen, dass vom Endgerät TLN-A eine Verbindung zu dem Endgerät TLN-B zwecks eines Telefonats aufgebaut wird. Dabei wird zwischen Dienstebene SL (SL: für service level) und Netzwerkebene (NL: für network level) unterschieden, was in der Figur durch eine durchbrochene Linie kenntlich gemacht ist. Auf der Dienstebene SL findet die Signalisierung SIG(VA,DS) (SIG(VA,DS) für: Signalisierung von Verbindungsaufbau und Dienststeuerung) des Verbindungsaufbaus und der Dienststeuerung statt. Zu diesem Zwecke sind Steuervorrichtungen CCP-A und CCP-B (CCP: für Call Control Point) z.B. Media Gateway Controller oder Vermittlungsanlagen mit den Zugangsnetzen AN-A und AN-B der Endgeräte TLN-A und TLN-B verbunden. Die Übertragung von Nutzdaten erfolgt auf der Netzwerkebene NL und führt zumindest zum Teil über das erfindungsgemäße Netz IPN (IPN: für IP Net). Das Netz IPN arbeitet paketorientiert und verbindungslos. Nutzdatenpakete, die im Rahmen des Telefonats von dem Endgerät TNL-A zu dem Endgerät TLN-B übertragen werden, gelangen über den Randknoten IgNd (IgNd: für ingress node) in das Netz IPN und verlassen es wieder über den Randknoten EgNd (EgNd: für egress node).

Im Zuge des Verbindungsaufbaus auf der Dienstebene SL wird von Endgerät TLN-A über das Zugangsnetz AN-A an die Steuereinrichtung CCP-A der Verbindungswunsch signalisiert. Das Endgerät TLN-A wird authentifiziert, beispielsweise anhand einer Namens- oder Adressinformation. Anschließend wird das gerufene Endgerät TLN-B bzw. die zugeordnete Steuereinrichtung CCP-B identifiziert und lokalisiert. Üblicherweise wird eine Verbindungsaufbaunachricht von der Steuereinrichtung CCP-A an die Steuereinrichtung CCP-B übermittelt. In der Steuereinrichtung CCP-B werden relevante Informationen extrahiert und bei dem Zugangsnetz AC-B die Verfügbarkeit des Endgeräts TLN-B überprüft sowie relevante Informationen abgefragt. Die Verbindungsaufbaunachricht wird schließlich von der Steuereinrichtung CCP-B zur Steuereinrichtung CCP-A quittiert und die für die Verbindung erforderlichen Informationen wie z.B. Adressinformationen des Endgeräts TLN-B übermittelt. Anschließend kann der Verbindungsaufbau auf der Dienstebene SL abgeschlossen werden. Bei erfolgreichen Verbindungsaufbau können auf der Netzwerkebene NL dann Nutzdaten ausgetauscht werden.

Bei dem gewählten Beispiel werden als Nutzdaten Sprachinformationen in Echtzeit, d.h. mit QoS Niveau ausgetauscht. Für die Übertragung mit QoS Niveau werden erfindungsgemäß Zulässigkeitsprüfungen durchgeführt. Im Rahmen dieser Zulässigkeitsüberprüfungen findet Signalisierung statt, z.B. bei der Übermittlung der gewünschten Qualitätsanforderungen, zur übermittlung des Resultats der Zulässigkeitsprüfungen etc. Im folgenden wird diese Signalisierung als QoS-Signalisierung bezeichnet. Es werden zwei Varianten unterschieden, je nachdem, ob die QoS-Signalisierung im Rahmen der Zulässigkeitsprüfungen auf der Dienstebene SL oder der Netzwerkebene NL durchgeführt wird.

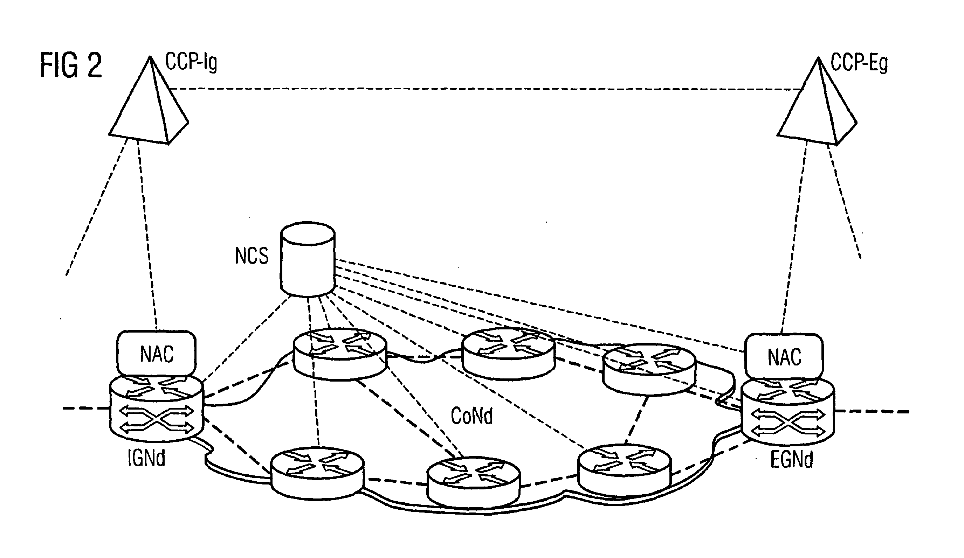

Bei einer QoS-Signalisierung auf der Dienstebene SL kann das erfindungsgemäße Verfahren wie folgt ablaufen: Über Steuereinrichtungen der Dienstebene, CCP-Ig und CCP-Eg, werden die Randknoten IgNd und EgNd identifiziert, über die die Nutzdaten als Nutzdaten-Pakete übertragen werden. Die in Figur 2 dargestellten Steuereinrichtungen CCP-Ig und CCP-Eg können, aber müssen nicht mit den den Zugangsnetzen AN-A und AN-B zugeordneten Steuervorrichtungen CCP-A und CC-P identisch sein.

In der Regel wird bei Ferngesprächen auf der Dienstebene SL eine Mehrzahl von Steuervorrichtungen bei der Signalisierung beteiligt sein. Diese Steuervorrichtungen haben dann direkten Zugriff nur auf einen Abschnitt oder ein Teilnetz der gesamten Übertragungstrecke für die Nutzdaten. Die Steuereinrichtungen CCP-Ig (CCP-Ig: für call control point at ingress node) und CCP-Eg (CCP-Eg: für call control point at egress node) sind **dadurch gekennzeichnet, dass** sie mit den Randknoten IgNd und EgNd kommunizieren. Die beiden Steuervorrichtungen CCP-Ig und CCP-Eg können dabei auch zusammenfallen.

In Figur 2 sind weitere Randknoten eingezeichnet. Nicht einzeln dargestellt sind die inneren Knoten CoNd (CoNd: für core node). Es ist zudem ein Kontrollserver NCS (NCS: für network control server) gezeigt, durch den Netzwerk-Management Aufgaben wahrgenommen werden.

Die erfindungsgemäßen Zulässigkeitsprüfungen NAC (NAC: für network admission control) hinsichtlich Netzeingang und Netzausgang finden z.B. in den Randknoten IgNd bzw. EgNd statt. Durch die Steuereinrichtungen CCP-Ig und CCP-Eg der Dienstebene SL werden den Randknoten IgNd und EgNd die Anforderungen für das VoIP-Telefonat zwischen den Endgeräten TLN-A und TLN-B übermittelt. Die Anforderungen können neben den relevanten Verkehrsparametern, wie der Bandbreite und den QoS-Anforderungen zusätzliche Parameter hinsichtlich Zuverlässigkeit, Sicherheit, etc. umfassen. Das Ergebnis der Zuverlässigkeitsprüfungen an den Netzgrenzen wird den Steuervorrichtungen CCP-A und CCP-B signalisiert. Abhängig von den Ergebnissen der Zulässigkeitsprüfungen wird A-seitig die Übertragung der Nutzdaten freigegeben oder abgeblockt und evtl. eine alternative Route für die Nutzdatenübertragung gesucht (in der englischsprachigen Literatur auch als Bearer Redirection bekannt). Die Zulässigkeitsprüfungen können nach oder während des Verbindungsaufbaus auf der Dienstebene SL stattfinden. Bei Zulässigkeitsprüfungen während des Verbindungsaufbaus kann evtl. bei einem negativen Ergebnis der Verbindungsaufbau abgebrochen werden.

Bei QoS-Signalisierung auf der Netzwerkebene NL werden die Zulässigkeitsprüfungen erst nach dem Verbindungsaufbau auf der Dienstebene SL angestoßen. Nach erfolgreichen Verbindungsaufbau auf der Dienstebene SL wird die QoS-Signalisierung auf der Netzwerkebene NL freigegeben und es werden die relevanten Informationen, wie z.B. B-seitige Adressinformationen übergeben. Das kann durch eine entsprechende Nachricht von der Steuervorrichtung CCP-A an eine im Zugangsnetz AC-A positionierte Vorrichtung, z.B. Mediagateway, erfolgen. Zur QoS-Signalisierung kann auch von der Dienstebene SL z.B. von der Steuervorrichtung CCP-A eine Programmstruktur, z.B. ein Java-Applet der Vorrichtung im Zugangsnetz zur Verfügung gestellte werden. Mit Hilfe der im Rahmen des Dienstaufbaus auf der Dienstebene erfragten Adressinformationen und gegebenenfalls mit Hilfe der heruntergeladenen Programmstruktur wird auf der Netzwerkebene eine Signalisierungsnachricht an das B-seitige Endgerät TLN-B bzw. das B-seitige Zugangsnetz AN-B gesendet. Durch diese und evtl. weitere Signalisierungsnachrichten werden die Randknoten IgNd und EgNd lokalisiert und in den Randknoten die Zulässigkeitsprüfungen veranlasst. Die Ergebnisse der Zulässigkeitsprüfungen werden anschließend durch Nachrichten auf der Netzwerkebene NL an das A-seitige Zugangsnetz AN-A bzw. den A-seitigen Teilnehmer TLN-A signalisiert.

Zusätzlich zu den Zulässigkeitsprüfungen hinsichtlich Netzeingang und -ausgang wird eine Zulässigkeitsprüfung betreffend die Gesamtkapazität des Netzes vorgenommen. Diese Zulässigkeitsprüfung kann z.B. auch in einem der Randknoten IgNd bzw. EgNd, verteilt auf beide Randknoten IgNd und EgNd oder in einem dafür im Netz vorgesehenen Server erfolgen.

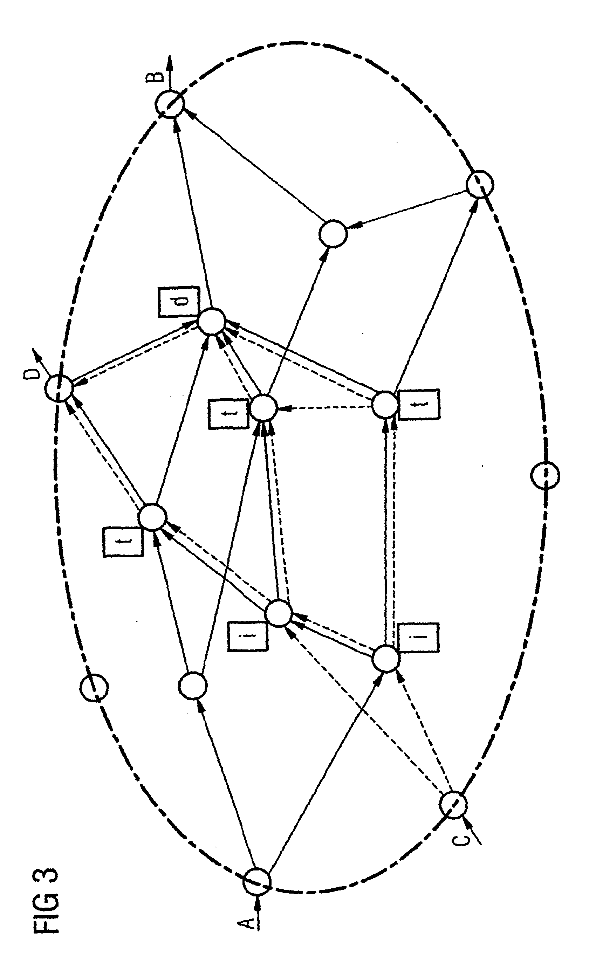

Figur 3 zeigt eine schematische Darstellung verschiedener Wege für das Routing zweier Flows in einem erfindungsgemäßen Netz. Die Grenze des Netzes ist durch eine gepunktete Linie dargestellt. Netzknoten sind durch Kreise wiedergegeben, wobei die Kreise, die Randknoten repräsentieren, die gepunktete Linie schneiden. Mit Hilfe von Pfeilen sind mögliche Wege für Flows dargestellt. Die gestrichelten Pfeile betreffen mögliche Wege für einen Flow, der bei dem Rangknoten C in das Netz eintritt und zu dem Randknoten D übertragen wird, wo die Datenpakete des Flows das Netz wieder verlassen. Durch durchgezogene Pfeile sind mögliche Wege für einen Flow dargestellt, der von dem Randknoten A zu dem Randknoten B geleitet wird. Bei den meisten inneren Knoten gibt es mehr als eine Alternative bzw. Verzweigungen für den Weg des Flows. Im folgenden werden für einen bestimmten Flow die verschiedenen alternativen möglichen Wegabschnitte von einem inneren Knoten zu dem nächsten Knoten, d.h. für den "next hop', als Verzweigungsfächer des Flows bei dem entsprechenden inneren Knoten bezeichnet. Bei inneren Knoten, die auf möglichen Wegen beider Flows liegen, ist angegeben, ob die Verzweigungsfächer der Flows identisch i, teilweise disjunkt t oder disjunkt d sind.

Die möglichen Wege bestimmen sich aus Parametern des Netzes, wie Topologie, Kapazität der einzelnen Wegabschnitte, Verzögerungszeiten etc. Die Entscheidungen über den Arm des Wegefächers, über den ein Paket oder eine Gruppe von Paketen weiter übertragen wird, wird lokal in Abhängigkeit der momentan gültigen Verkehrsparameter getroffen. Auf diese Weise wird eine relativ gleichmäßige Auslastung des Netzes erreicht und Belastungsengpässe werden vermieden.

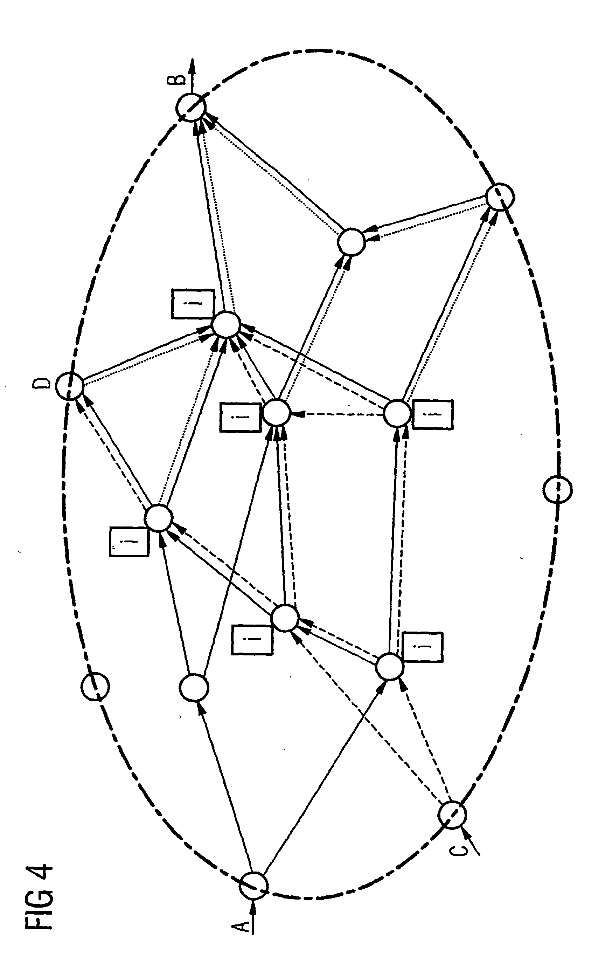

Figur 4 unterscheidet sich von Figur 3 dadurch, dass nun beide Flows das Netz bei dem Randknoten B verlassen. Bei den inneren Knoten, die auf möglichen Wegen beider Flows liegen, sind die Verteilungsfächer beider Flows identisch, was ein i bei den Knoten verdeutlicht ist. Die Verteilungsfächer könnten im Rahmen von Verkehrssteuerung, bzw. traffic shaping, auch voneinander abweichen. Sie werden aber für Flows mit dem gleichen Ziel zumindest weitgehend identisch sein. Durch die erfindungsgemäßen Zulässigkeitsprüfungen wird erreicht, dass der Randknoten B und die inneren Knoten, die dem Randknoten topologisch benachbart sind, nicht durch die ankommenden Datenpakete beider Flows überlastet werden. Wenn beide Flows nicht mit den angemeldeten Parametern übertragen werden können, wird beispielsweise einer nicht zugelassen. Bei der Beschränkung der Zulässigkeitsüberprüfungen auf den Netzeingang könnte es in der Konstellation von Figur 4 zu einem Engpass bei dem Randknoten B kommen, der QoS Garantiezusagen im Wege stünde.

## Patentansprüche

1. Verfahren zur Verkehrsbegrenzung in einem paketorientierten, verbindungslosen Netz für eine effiziente Übertragung mit QoS Niveau von Datenpaketen zumindest einer Prioritätsklasse, bei dem für eine Gruppe von durch das Netz zu leitenden Datenpaketen einer Prioritätsklasse Zulässigkeitsprüfungen durchgeführt werden,
**dadurch gekennzeichnet, dass**
- die Zulässigkeitsprtifungen eine auf den Netzeingang und auf den Netzausgang bezogene Zulässigkeitsprüfung umfassen, und
- die Übertragung der Gruppe von Datenpaketen mit der angeforderten Priorität nur zugelassen wird, wenn die Zulässigkeitsprüfungen positiv ausfallen.

2. Verfahren nach Anspruch 1,
**dadurch gekennzeichnet,**
- **dass** die Gruppe von Datenpaketen durch die Datenpakete eines Verkehrsstroms oder durch die an einem Port aggregierten Datenpakete der Prioritätsklasse gegeben ist.

3. Verfahren nach Anspruch 2,
**dadurch gekennzeichnet,**
- **dass** der Verkehrsstrom durch einen Flow gegeben ist, einer Verbindung zugeordnet ist oder Datenpakete mit einer gemeinsamen Adressinformation umfasst.

4. Verfahren nach einem der vorhergehenden Ansprüche,
**dadurch gekennzeichnet,**
- **dass** im Rahmen der Zulässigkeitsprüfungen der Auslastungsgrad betreffend die Gesamtkapazität des Netzes und die zur Verfügung stehende Bandbreite der bei der Übermittlung der Gruppe von Datenpaketen zu verwendenden eingangs- und ausgangsseitigen Netzzugänge berücksichtigt wird.

5. Verfahren nach einem der vorhergehenden Ansprüche,
**dadurch gekennzeichnet,**
- **dass** im Rahmen der Zulässigkeitsprüfungen der Auslastungsgrad des Netzes und der bei der Übermittlung der Gruppe von Datenpaketen zu verwendenden eingangs- und ausgangsseitigen Netzzugänge der Verkehr der Prioritätsklasse des zu übertragenden Verkehrsstroms oder/und der Verkehr einer Prioritätskasse, die höher oder gleich der Prioritätsklasse der Gruppe von Datenpaketen ist, berücksichtigt wird.

6. Verfahren nach einem der vorhergehenden Ansprüche,
**dadurch gekennzeichnet,**
- **dass** bei einem negativen Ergebnis der Zulässigkeitsüberprüfungen die Gruppe von Datenpaketen abgewiesen wird.

7. Verfahren nach einem der vorhergehenden Ansprüche,
**dadurch gekennzeichnet,**
- **dass** für die durch das Netz zu leitenden Gruppe von Datenpaketen Verkehrsparameter in dem Netz angemeldet werden, die eine Information betreffend die benötigten Übertragungsressourcen umfassen.

8. Verfahren nach Anspruch 7,
**dadurch gekennzeichnet, .**
- **dass** nach Maßgabe der angemeldeten Verkehrsparameter eine Reservierung von Übertragungsressourcen vorgenommen wird.

9. Verfahren nach Anspruch 7,
**dadurch gekennzeichnet,**
- **dass** während der Übertragung des Verkehrsstroms überprüft wird, dass die angemeldeten Verkehrsparameter eingehalten werden.

10. Verfahren nach Anspruch 7,
**dadurch gekennzeichnet,**
- **dass** nicht angemeldete Datenpakete ausgeblockt/verworfen werden.

11. Verfahren nach einem der vorhergehenden Ansprüche,
**dadurch gekennzeichnet,**
d **ass** Zulässigkeitsprüfungen nur für priorisierten Verkehr durchgeführt wird.

12. Verfahren nach einem der vorhergehenden Ansprüche,
**dadurch gekennzeichnet,**
- **dass** nicht priorisierte Datenpakete mit best-effort Qualität übertragen werden.

13. Paketorientiertes, verbindungsloses Netz zur Datenübertragung mit Mitteln zur Durchführung einer Zulässigkeitsprüfung am Netzeingang und am Netzausgang für die Übertragung einer durch das Netz zu leitenden Gruppe von Datenpaketen einer Prioritätsklasse.

14. Netz nach Anspruch 13,
**dadurch gekennzeichnet,**
- **dass** das Netz nach Maßgabe von Grenzwerten für QoS bestimmende Faktoren dimensioniert ist.

15. Netz nach Anspruch 14,
**dadurch gekennzeichnet,**
d **ass** das Netz nach Maßgabe von maximalen Werten für die statistische Wahrscheinlichkeit dimensioniert ist, mit der die Grenzwerte der QoS bestimmenden Faktoren überschritten werden.

16. Netz nach einem der Ansprüche 13 bis 15,
**dadurch gekennzeichnet,**
- **dass** das Netz einer Single Routing Domain entspricht.

17. Netz nach einem der Ansprüche 13 bis 16,
**dadurch gekennzeichnet,**
- **dass** eine Datenübertragung über das Netz mit Hilfe des IP Protokolls vornehmbar ist.

18. Randknoten zur Verwendung in einem paketorientierten, verbindungslosen Netz gemäss Anspruch 13,
**dadurch gekennzeichnet, dass**
- der Randknoten mit Mitteln zur Durchführung einer Zulässigkeitsprüfung am Netzeingang oder am Netzausgang für die Übertragung eines durch das Netz zu leitenden Verkehrsstroms einer Prioritätsklasse ausgestattet ist.

19. Randknoten nach Anspruch 18,
- mit Mitteln zur Überwachung von in dem Netz angemeldeten Verkehrsparametern.

20. Server zur Verwendung in einem paketorientierten, verbindungslosen Netz gemäss Anspruch 13,
**dadurch gekennzeichnet, dass**
- der Server mit Mitteln zur Durchführung einer Zulässigkeitsprüfung am Netzeingang und am Netzausgang für die Übertragung einer durch das Netz zu leitenden Gruppe von Datenpaketen einer Prioritätsklasse ausgestattet ist.

21. Server nach Anspruch 20,
- mit Mitteln zur Überwachung von in dem Netz angemeldeten Verkehrsparametern.

## Claims

1. Method for limiting traffic in a packet-oriented, connectionless network for an efficient transmission at QoS level of data packets of at least one priority class, in which admissibility checks are performed for a group of data packets of a priority class to be transmitted through the network, **characterized in that**
- the admissibility checks comprise admissibility checks related to the network ingress and to the network egress, and
- the transmission of the group of data packets with the requested priority is only permitted if the admissibility checks have a positive result.

2. Method according to Claim 1, **characterized in that**
- the group of data packets is given by the data packets of a traffic stream or by the data packets of the priority class aggregated at a port.

3. Method according to Claim 2, **characterized in that**
- the traffic stream is given by a flow, is allocated to a connection or comprises data packets having common address information.

4. Method according to any of the preceding claims, **characterized in that**
- as part of the admissibility checks, the load level with respect to the total capacity of the network and the available bandwidth of the network accesses at the ingress and egress ends to be used in the transmission of the group of data packets is taken into consideration.

5. Method according to any of the preceding claims, **characterized in that**
- as part of the admissibility checks the load level of the network and of the network accesses at the ingress and egress ends to be used during the transmission of the group of data packets, the traffic of the priority class of the traffic stream to be transmitted or/and the traffic of a priority class which is higher than or equal to the priority class of the group of data packets is taken into consideration.

6. Method according to any of the preceding claims, **characterized in that**
- in the case of a negative result of the admissibility checks, the group of data packets is rejected.

7. Method according to any of the preceding claims, **characterized in that**
- for the group of data packets to be transmitted through the network, traffic parameters are declared to the network which comprise information relating to the transmission resources needed.

8. Method according to Claim 7, **characterized in that**
- transmission resources are reserved as determined by the declared traffic parameters.

9. Method according to Claim 7, **characterized in that**
- during the transmission of the traffic stream, it is checked that the declared traffic parameters are adhered to.

10. Method according to Claim 7, **characterized in that**
- data packets not declared are blocked out/discarded.

11. Method according to any of the preceding claims, **characterized in that**
- admissibility checks are performed only for prioritised traffic.

12. Method according to any of the preceding claims, **characterized in that**
- data packets which are not prioritised are transmitted at best effort quality.

13. Packet-oriented, connectionless network for data transmission comprising means for performing an admissibility check at the network ingress and at the network egress for the transmission of a group of data packets of a priority class to be transmitted through the network.

14. Network according to Claim 13, **characterized in that**
- the network is dimensioned as determined by threshold values for QoS-determining factors.

15. Network according to Claim 14, **characterized in that**
- the network is dimensioned as determined by maximum values for the statistical probability with which the threshold values of the QoS-determining factors are exceeded.

16. Network according to any of Claims 13 to 15, **characterized in that**
- the network corresponds to a single routing domain.

17. Network according to any of Claims 13 to 16, **characterized in that**
- a data transmission can be carried out via the network by means of the IP protocol.

18. Edge node for use in a packet-oriented, connectionless network according to Claim 13, **characterized in that**
- the edge node is equipped with means for carrying out an admissibility check at the network ingress or at the network egress for the transmission of a traffic stream of a priority class to be transmitted through the network.

19. Edge node according to Claim 18,
- comprising means for monitoring traffic parameters declared to the network.

20. Server for use in a packet-oriented, connectionless network according to Claim 13, **characterized in that**
- the server is equipped with means for carrying out an admissibility check at the network ingress and at the network egress for the transmission of a group of data packets of a priority class to be transmitted through the network.

21. Server according to Claim 20,
- comprising means for monitoring traffic parameters declared to the network.

## Revendications

1. Procédé pour limiter le trafic dans un réseau orienté paquet et sans liaison, pour une transmission efficace à bon niveau de qualité de service de paquets de données d'au moins une classe de priorité, avec lequel des essais d'admissibilité sont effectués pour un groupe de paquets de données d'une classe de priorité, à acheminer par le réseau,
**caractérisé en ce que**
- les essais d'admissibilité comprennent un test d'admissibilité en rapport à l'entrée du réseau et à la sortie du réseau, et
- la transmission du groupe de paquets de données n'est admise avec la priorité demandée que si les tests d'admissibilité sont positifs.

2. Procédé selon la revendication 1,
**caractérisé en ce que**
- le groupe de paquets de données est défini par les paquets de données d'un flux de trafic ou par les paquets de données, attribués à un port, de la classe de priorité.

3. Procédé selon la revendication 2,
**caractérisé en ce que**
- le flux de trafic est défini par un flux, est attribué à une liaison ou comprend des paquets de données avec une information d'adresse commune.

4. Procédé selon l'une quelconque des revendications précédentes,
**caractérisé en ce que**,
- dans le cadre des essais d'admissibilité, le degré de charge concernant la capacité totale du réseau et la largeur de bande mise à disposition des accès au réseau côté entrée et côté sortie, à utiliser lors de la transmission du groupe de paquets de données, sont pris en compte.

5. Procédé selon l'une quelconque des revendications précédentes,
**caractérisé en ce que**,
- dans le cadre des essais d'admissibilité, le degré de charge du réseau et des accès au réseau côté entrée et côté sortie à utiliser pour la transmission du groupe de paquets de données, le trafic de la classe de priorité du flux de trafic à transmettre et/ou le trafic d'une classe de priorité, qui est supérieure ou identique à la classe de priorité du groupe de paquets de données, sont pris en compte.

6. Procédé selon l'une quelconque des revendications précédentes,
**caractérisé en ce que**
- le groupe de paquets de données est refusé dans le cas d'un résultat négatif des essais d'admissibilité.

7. Procédé selon l'une quelconque des revendications précédentes,
**caractérisé en ce que**,
- pour le groupe de paquets de données à acheminer par le réseau, on signale dans le réseau des paramètres de trafic qui comportent une information concernant les ressources de transmission requises.

8. Procédé selon la revendication 7,
**caractérisé en ce que**
- une réservation de ressources de transmission est effectuée selon les paramètres de trafic signalés.

9. Procédé selon la revendication 7,
**caractérisé en ce que**
- on vérifie pendant la transmission du flux de trafic que les paramètres de trafic signalés sont respectés.

10. Procédé selon la revendication 7,
**caractérisé en ce que**
- des paquets de données non signalés sont bloqués/rejetés.

11. Procédé selon l'une quelconque des revendications précédentes,
**caractérisé en ce que**
- des essais d'admissibilité ne sont effectués que pour le trafic mis en priorité.

12. Procédé selon l'une quelconque des revendications précédentes,
**caractérisé en ce que**
- des paquets de données non mis en priorité sont transmis avec une qualité "best-effort".

13. Réseau orienté paquet, sans liaison, pour la transmission des données avec des moyens pour la mise en oeuvre d'un essai d'admissibilité à l'entrée du réseau et à la sortie du réseau pour la transmission d'un groupe de paquets de données d'une classe de priorité, à acheminer par le réseau.

14. Réseau selon la revendication 13,
**caractérisé en ce que**
- le réseau est dimensionné selon des valeurs limites pour des facteurs déterminant la qualité de service.

15. Réseau selon la revendication 14,
**caractérisé en ce que**
- le réseau est dimensionné selon des valeurs maximales pour la probabilité statistique avec laquelle les valeurs limites des facteurs déterminant la qualité de service sont dépassées.

16. Réseau selon l'une quelconque des revendications 13 à 15,
**caractérisé en ce que**
- le réseau correspond à un Single Routing Domain.

17. Réseau selon l'une quelconque des revendications 13 à 16,
**caractérisé en ce que**
- une transmission de données peut être effectuée par l'intermédiaire du réseau à l'aide du protocole IP.

18. Noeud périphérique pour une utilisation dans un réseau orienté paquet et sans liaison selon la revendication 13,
**caractérisé en ce que**
- le noeud périphérique est équipé de moyens pour la mise en oeuvre d'un essai d'admissibilité à l'entrée du réseau ou à la sortie du réseau pour la transmission d'un flux de trafic d'une classe de priorité, à acheminer par le réseau.

19. Noeud périphérique selon la revendication 18,
- doté de moyens pour le contrôle de paramètres de trafic signalés dans le réseau.

20. Serveur pour une utilisation dans un réseau orienté paquet et sans liaison selon la revendication 13,
**caractérisé en ce que**
- le serveur est équipé de moyens pour la mise en oeuvre d'un essai d'admissibilité à l'entrée du réseau et à la sortie du réseau pour la transmission d'un groupe de paquets de données d'une classe de priorité, à acheminer par le réseau.

21. Serveur selon la revendication 20,
- doté de moyens pour le contrôle de paramètres de trafic signalés dans le réseau.
